(19) **Europäisches Patentamt European Patent Office Office européen des brevets**

(11) **EP 3 363 670 B1**

(12) **EUROPEAN PATENT SPECIFICATION**

(45) Date of publication and mention of the grant of the patent:
**30.03.2022 Bulletin 2022/13**

(51) International Patent Classification (IPC):
**B60K 6/48** *(2007.10)* **B60W 50/10** *(2012.01)*
**B60W 30/18** *(2012.01)* **B60W 10/08** *(2006.01)*
**B60W 50/00** *(2006.01)*

(21) Application number: **18157954.1**

(22) Date of filing: **21.02.2018**

(52) Cooperative Patent Classification (CPC):
**B60K 6/48; B60L 15/20; B60L 50/16;**
**B60W 30/18127; B60W 50/10;** B60L 2240/423;
B60L 2240/545; B60L 2250/26; B60W 10/08;
B60W 2050/0026; B60W 2510/244;
B60W 2510/246; B60W 2510/248; B60W 2520/10;
B60W 2540/10;                                    (Cont.)

(54) **METHOD AND DEVICE FOR MANAGING THE PROPULSION OF A PARALLEL HYBRID VEHICLE**

VERFAHREN UND VORRICHTUNG ZUR VERWALTUNG DES ANTRIEBS EINES PARALLELEN HYBRIDFAHRZEUGS

PROCÉDÉ ET DISPOSITIF PERMETTANT DE GÉRER LA PROPULSION D'UN VÉHICULE HYBRIDE PARALLÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2017 IT 201700019444**

(43) Date of publication of application:
**22.08.2018 Bulletin 2018/34**

(73) Proprietor: **Iveco S.p.A.**
**10156 Torino (IT)**

(72) Inventors:
• **PERRONE, Attilio**
**16010 SERRA RICCO' (IT)**
• **AIMO BOOT, Marco**
**10072 CASELLE TORINESE (IT)**
• **CANEPA, Alessio**
**16156 GENOVA (IT)**

(74) Representative: **Studio Torta S.p.A.**
**Via Viotti, 9**
**10121 Torino (IT)**

(56) References cited:
**EP-A1- 1 241 043          EP-A2- 3 112 234**
**DE-A1-102015 114 533**

(52) Cooperative Patent Classification (CPC): (Cont.)
B60W 2710/083; Y02T 10/62; Y02T 10/64;
Y02T 10/7072; Y02T 10/72

**Description**

*PRIORITY CLAIM*

This application claims priority from Italian Patent Application No. 102017000019444 filed on 21/02/2017.

Technical field of the invention

The invention relates to the field of methods and devices for managing the propulsion of a hybrid vehicle.

State of the art

Parallel hybrid vehicles are provided with an internal combustion engine and with an electric motor generator, which are connected to the transmission of the vehicle. They can use either one or both of them for driving the vehicle.

The electric motor generator is supplied with power by batteries which are charged by the motor generator itself in predetermined operating phases of the vehicle. For example, they are charge when the vehicle is driven at a constant speed or when it slows down.

In the second case, we usually speak of regenerative braking. It exploits the inertia of the vehicle to charge the vehicle batteries when the accelerator pedal is completely released, but, especially in urban traffic, it determines a deterioration of the driving comfort with excessively strong brakings.

EP3112234 shows a solution according to which, during the release phase, a speed value of the vehicle is acquired and used during the subsequent coasting phase.

In particular, said initial speed value determines the intervals of angular positions of the accelerator pedal in which the coasting takes place, namely the driving torque of the engine is reduced to zero.

In particular, according to EP3112234, the coasting interval is extended based on the speed at which the release of the accelerator starts.

US2016059703 shows a solution according to which the torque delivery/absorption function of the electric motor generator is linear up to intersection with the abscissa axis and then the function identifies two or more linear developments with different inclinations, which depend on the speed of release of the accelerator pedal. The inclination is selected in relation to the quickness with which the accelerator pedal is released.

Further example of a method and a device for managing the propulsion of a hybrid vehicle is disclosed in EP 1 241 043 A1.

Summary of the invention

The object of the invention is to indicate a method and a relative device for managing the propulsion of a parallel hybrid vehicle, which are designed to improve the driving comfort, without penalize the vehicle battery charging process. This object is solved by a method according to claim 1 and a processing unit according to claim 10.

The basic idea of the present invention is of varying the torque curve delivered/absorbed by the electric motor vehicle based on the current speed of the vehicle.

More in particular, according to the invention, the delivered or braking torque generated/absorbed by the electric motor generator is a function of the position of the accelerator pedal and of the current speed of the vehicle.

By forcing the vehicle to have a constant speed value, one obtains a straight line, which identifies the so-called known term, namely the point of intersection of the ordinate axis. This point, according to the invention, is movable based on the speed of the vehicle.

For each point of intersection with the ordinate axis, a straight line is identified, which joins this point to the point corresponding to the maximum deliverable torque and to the maximum inclination of the accelerator pedal.

According to the invention, the torque curve has partial derivative, with respect to said inclination of the accelerator pedal, linear in a relative entire domain (0% - 100%). According to a preferred variant of the invention, the speeds of the vehicle are discretized through thresholds identifying a predetermined number of known terms.

Since the speed of the vehicle is acquired instant by instant and contributes to the variation of the aforesaid torque, then, when the vehicle is decelerating, as it slows down, the delivered/absorbed torque varies, even if the accelerator pedal is kept still, shifting between the aforesaid straight lines corresponding to the aforesaid speed thresholds, which identify the aforesaid points of intersection on the ordinate axis.

Preferably, this function is defined, according to the invention, both during the deceleration phase and during the acceleration phase of the vehicle.

The claims describe preferred embodiments of the invention, thus forming an integral part of the description.

Brief description of the figures

Further objects and advantages of the invention will be best understood upon perusal of the following detailed description of an embodiment thereof (and of relative variants) with reference to the accompanying drawings merely showing non-limiting examples, wherein:

figure 1 indicates a torque curve relating to a first strategy for managing the electric motor generator according to a technique known to the proprietor;
figure 2 shows a torque curve relating to a second strategy for managing the electric motor generator according to a technique known to the proprietor;
figure 3 indicates a torque curve relating to a first strategy for managing the electric motor generator according to the invention;
figure 4 shows a development of a parameter implemented for the analytic calculation of the torque function according to the strategy of figure 3.

In the figures, the same numbers and the same reference letters indicate the same elements or components.
For the purposes of the invention, the term "second" component does not imply the presence of a "first" component. As a matter of fact, these terms are only used for greater clarity and should not be interpreted in a limiting manner.
The information contained in the part concerning the state of art only serves the purpose of better understanding the invention and does not represent a declaration of existence of the items described.

Detailed description of embodiments

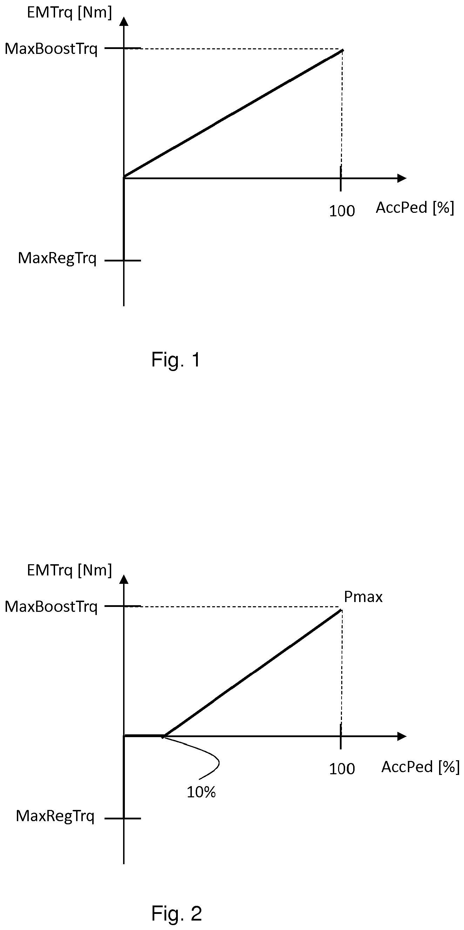

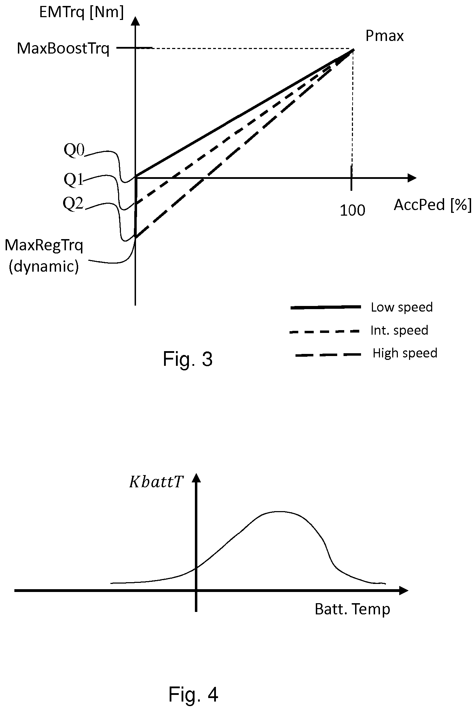

Hereinafter a description of the method according to the invention is described, which allows to operate a continuous control of the torque delivered/absorbed by the electric motor generator.
In order to make the explanation easier, the invention will be described through a direct comparison with the technical solution of figure 1, which the proprietor deems to be known. Figure 2, on the other hand, could represent an alternative to the solution of figure 1, whereas figure 3 graphically shows the solution according to the invention.
Figures 1 - 3 show diagrams of a torque curve EMTrq, which is positive when the electric motor generator operates as a motor and negative when it operates as an electric generator. It is delivered by the electric motor generator based on a position of the accelerator pedal.
The maximum positive deliverable torque is indicate in the figures with MaxBoostTrq. It is delivered when the accelerator pedal is completely pressed, namely when it reaches its maximum inclination.
With reference to figure 1, it is clearly disclosed that the delivery of the torque is linear with a zero known term.
This means that the electric motor generator delivers a positive torque EMTrq proportional to the pressing of the accelerator pedal and, when the latter is completely released, the motor generator delivers a fixed negative regenerative torque value MaxRegTrq.
Evidently, no coasting takes place, as there is a quick switch from a positive torque close to zero to a negative torque with a fixed value.
For the sake of simplicity, the same parameter names are used for all figures 1 - 3.
Figure 2, on the other hand, shows a situation in which the torque curve intersects the abscissa axis, for example in the area of a percentage value amounting to 10% of the inclination of the accelerator pedal. Furthermore, the electric motor generator remains inactive, namely delivers a zero torque, from said 10% value up to the complete release of the accelerator pedal. As in figure 1, when the pedal is completely released, a fixed regenerative torque value MaxRegTrq is delivered.
Figure 3 shows, instead, the behaviour of the electric motor according to the invention.
There are different discrete torque delivery straight lines as a function of vehicle speed thresholds.
All straight lines have an end in the point with coordinates 100%, MaxBoostTrq.
Therefore, keeping the speed of the vehicle within two distinct speed intervals, two straight lines are achieved, which express the torque delivered/absorbed by the electric motor, having different angular coefficients and different respective known terms, unlike what figures 1 and 2 disclose.
There is no coasting interval, but one single point for each straight line. This point evidently moves on the abscissa axis in relation to the current speed of the vehicle and not in relation to the speed of the vehicle at the beginning of the deceleration, as disclosed in EP3112234.
According to the invention, when the vehicle is decelerating or slowing down, there is a (gradual) shift from a straight line to another, determining a lack of linearity based on the variation of the speed of the vehicle.
This lack of linearity in the response of the accelerator pedal entails a greater comfort, as the braking torque generated by the electric motor generator is proportional to the speed of the vehicle.

Actually, the discretization of the speed in low, intermediate and high speed allows to have three straight torque curves and this enables a better understanding of the invention.

Indeed, the speed thresholds can be very close to one another, generating a very dense bundle of straight lines, which reproduces an extremely soft behaviour of the electric motor generator.

**First example:**

Let's assume that a vehicle driving at a high speed and the accelerator pedal is released until it exactly reaches the point of intersection of the (lower) torque straight line with the abscissa axis.

In this point, the engine is in a coasting phase and, therefore, the vehicle slows down.

When the speed of the vehicle goes below a predetermined threshold, which activates the aforesaid (lower) straight line, the scheme uses the intermediate straight line of figure 3. This implies that, even though the pedal has not been moved, the motor generator starts delivering driving torque.

This behaviour cannot be found in EP3112234, as, according to this document, one does not use the current speed of the vehicle, but the speed at the beginning of the accelerator pedal release procedure.

**Second example:**

Let's assume that the vehicle is driving at a high speed and that the accelerator pedal is completely released.

The braking torque generated by the electric motor generator expires proportionally to the speed of the vehicle and this braking torque practically is equal to zero when the vehicle has almost stopped.

Again, this behaviour is not disclosed in EP3112234.

This strategy identifies a bundle of straight lines going through the point with coordinates (100; MaxBoostTrq) and the angular coefficient varies - at least - based on the current speed of the vehicle. In particular, it increases proportionally to the speed of the vehicle. Therefore, the intersection of the straight line with the ordinate axis changes proportionally to the speed of the vehicle, as well.

Unlike the solution of figure 2, according to the invention, the electric motor generator delivers a negative torque, whose modulus linearly depends on the percentage of inclination of the accelerator pedal and at least on the speed of the vehicle vehSpeed, in the interval comprised between the point with coordinates (100; MaxBoostTrq) up to the negative point of intersection Q with the ordinate axis. This point of intersection Q, in relation to predetermined speed thresholds, assumes values Q0, Q1, Q2, etc., which have a negative value and are indicated in figure 3.

It is remarked that the thresholds were solely selected for the purpose of a better understanding of the invention.

Q0 can have a zero value. This turns out to be particularly advantageous when the vehicle moves very slowly, queued along a slight slope.

Under these conditions, no negative torque is delivered, as this would force the driver to press the accelerator pedal in order to move the vehicle. On the other hand, the low speed of the vehicle would not permit a significant recovery of useful energy.

Evidently, the function identifying the torque curve delivered/absorbed by the electric motor generator, according to the invention, has a partial derivative, with respect to the position of the accelerator pedal AccPed, which is linear up to the intersection with the ordinate axis, namely up to the point of complete release of the accelerator, with clear differences with respect to the solution of figure 2. This means that there are no cusps or broken lines, as shown in US2016059703, as long as the vehicle remains in the same speed interval where said straight line is defined.

Vice versa, passing from one speed interval to another causes shifting between the straight lines shown in figure 3.

According to a preferred variant of the invention, the behaviour of the electric motor generator, which is schematically shown in figure 3, can be mathematically expressed by the following equation

EMtrq = (mQ) AccPed% + Q and precisely:

$$\begin{cases} EMTrq = \dfrac{(MaxBoostTrq - MaxRegTrq) \cdot AccPed\%}{100} + MaxRegTrq \\ MaxRegTrq = MaxTrq \cdot f(vehSpeed) \cdot KbattS(SOC, SOH) \cdot KbattT(battTemp) \end{cases}$$

wherein the angular coefficient depends on the percentage of inclination AccPed% of the accelerator pedal and on the dependent variable MaxRegTrq, which is a function at least of the speed of the vehicle.

This dependent variable remains constant within a vehicle speed interval, thus obtaining the bundle of straight lines shown in figure 3.

On the other hand, the known term Q coincides with said dependent variable MaxRegTrq and similarly remains constant within a vehicle speed interval, thus obtaining the bundle of straight lines shown in figure 3.

In particular, MaxRegTrq is given by a function f(vehSpeed) - having a value raging from 0 to 1 - of the speed vehSpeed of the vehicle, multiplied by MaxTrq. MaxTrq generally depends on the characteristics of the inverter associated with the electric motor generator to manage the transfer of energy from and for the vehicle storage batteries and represents, in mechanical terms, a maximum negative torque value deliverable by the electric motor generator.

To point out that MaxRegTrq is a variable parameter, in figure 3 it is indicated as dynamic.

Indeed, it varies depending on the current speed of the vehicle identifying the moduli of the points Q0, Q1, Q2, etc..

Preferably, this dependant variable MaxRegTrq can also be a function of other factors, such as KbattS and KbattT, thus obtaining a function of three or more variables. Both KbattS and KbattT can have a value ranging from 0 to 1 and relate to the characteristics of the vehicle batteries connected to the electric motor generator through the inverter.

The first one represents a function of the state of charge SOC and of the state of health SOH, in particular KbattS = SOC*SOH/10^4. The second one represents a corrective factor, which is a function of the temperature of the batteries.

These corrective factors KbattS and KbattT are generally provided by the suppliers of the vehicle batteries.

As you can see in figure 3, the possible speeds of a hybrid vehicle are preferably divided into at least three intervals identified as low speed (LowSpeed), which includes a zero speed of the vehicle, intermediate speed (Int. Speed) and high speed (High Speed), which includes the maximum speed that can be reached by the vehicle.

This method can preferably be implemented by the vehicle management unit VMU, which interfaces with the vehicle control unit VCU.

In some circumstances the two units are integrated in one single processing unit.

The value of MaxRegTrq can depend on the characteristics of the electric motor generator or it can be set with every application.

This invention can be advantageously implemented by means of a computer program comprising coding means for carrying out one or more steps of the method, when the program is run on a computer.

The non-limiting example described above can be subjected to variations, without for this reason going beyond the scope of protection of the invention set forth in the claims, comprising all equivalent embodiments for a person skilled in the art.

When reading the description above, a skilled person can carry out the subject-matter of the invention without introducing further manufacturing details. The elements and features contained in the different preferred embodiments, drawings included, can be combined with one another, without for this reason going beyond the scope of protection of the invention set forth in the claims.

**Claims**

1. A method for managing the propulsion of a parallel hybrid vehicle comprising an electric motor generator and an accelerator pedal and a relative sensor connected thereto to detect an inclination of the accelerator pedal, wherein a torque curve (EMTrq) delivered/absorbed by the electric motor generator is a function of two variables, wherein a first variable coincides with said inclination of said accelerator pedal and a second variable coincides with a current speed (vehSpeed) of the hybrid vehicle, the method being **characterised in that** said torque curve has partial derivative, with respect to said inclination of the accelerator pedal (AccPed%), linear in a relative entire domain (0% - 100%).

2. The method according to claim 1, wherein said domain is continuous between a complete release condition (0%) of the accelerator pedal and a complete opening condition (100%) of the accelerator pedal.

3. The method according to claim 2, wherein there are

   - a first point (Pmax) having, in a plane inclination(pedal)/torque(electric motor generator), coordinates

      . complete opening (100%) and
      . maximum positive torque (MaxBoostTrq) deliverable by the electric motor generator,

   - second point (Q) having coordinates

      • complete release (0%) of the accelerator pedal and

• intersection with the ordinate axis with zero intercept (Q0) or negative intercept (Q1, Q2),

wherein a modulus of said intercept is proportional to said current speed.

4.  The method according to any one of the claims from 1 to 3, wherein an intercept of said torque curve (EMTrq) with an abscissa axis of said plane has a positive modulus proportional to said current speed of the vehicle.

5.  The method according to any one of the preceding claims 3 or 4, wherein said function is a discrete function of said current speed, identifying a sheaf of straight lines going through said first point (Pmax) and having angular coefficient proportional to discrete values of said current speed of the vehicle.

6.  The method according to any one of the preceding claims, wherein said torque curve defines a partial function with respect to said accelerator pedal having angular coefficient greater than zero and known term (Q) less than/equal to zero with the respective moduli proportional to said speed (vehSpeed) of the hybrid vehicle.

7.  The method according to any one of the preceding claims, wherein said torque curve (EMTrq)

$$\begin{cases} EMTrq = \dfrac{(MaxBoostTrq - MaxRegTrq)\cdot AccPed\%}{100} + MaxRegTrq \\ MaxRegTrq = MaxTrq \cdot f(vehSpeed) \end{cases}$$

is given by the sum of

- a first amount given by a product of a value corresponding to said inclination of the accelerator pedal (AccPed%) multiplied by a difference between a maximum torque value (MaxBoostTrq) deliverable by the electric motor generator minus a first parameter (MaxRegTrq);
- a second amount coinciding with said first parameter (MaxRegTrq), wherein said first parameter (MaxRegTrq) is a function at least of said speed (vehSpeed) of the vehicle.

8.  The method according to claim 7, wherein said first parameter (MaxRegTrq) is equal to a function (f(vehSpeed)) of said speed (vehSpeed) of the vehicle, having value ranging from 0 to 1, multiplied by a second parameter (MaxTrq), wherein said second parameter (MaxTrq) depends on characteristics of an inverter associated with the electric motor generator to manage the transfer of energy from and for vehicle storage batteries.

9.  The method according to claim 7 or 8, wherein said first parameter (MaxRegTrq) is equal to a function (f(vehSpeed)) of said speed (vehSpeed) of the vehicle, having value ranging from 0 to 1, multiplied by a third (KbattS) and/or a fourth parameter (KbattT), both ranging from 0 to 1, wherein said third parameter is a function of a state of charge (SOC) and of a state of health (SOH) of said vehicle batteries and wherein said fourth parameter is a function of a temperature of said vehicle storage batteries.

10. A processing unit for managing an electric motor generator of parallel hybrid vehicle configured to perform the method of any one of the claims 1 to 9.

11. A parallel hybrid vehicle comprising a transmission, an internal combustion engine and an electric motor generator connected to said transmission and further comprising a processing unit according to claim 10.

**Patentansprüche**

1.  Verfahren zur Verwaltung des Antriebs eines parallelen Hybridfahrzeugs, welches einen elektrischen Motorgenerator und ein Beschleunigungspedal und einen damit verbundenen Relativsensor umfasst, zur Detektion einer Neigung des Beschleunigungspedals, wobei eine Drehmomentkurve (EMTrq), die von dem elektrischen Motorgenerator abgegeben/aufgenommen wird, eine Funktion von zwei Variablen ist, von denen eine erste Variable mit der Neigung des Beschleunigungspedals zusammenfällt und eine zweite Variable mit einer aktuellen Geschwindigkeit (veh-Speed) des Hybridfahrzeugs zusammenfällt, welches Verfahren **dadurch gekennzeichnet ist, dass** die Drehmomentkurve eine partielle Ableitung bezüglich der Neigung des Beschleunigungspedals (AccPed%) aufweist, die über einen relativen gesamten Bereich (0% - 100%) linear ist.

2. Verfahren gemäß Anspruch 1, bei welchem der Bereich kontinuierlich ist zwischen einem vollständig gelösten Zustand (0%) des Beschleunigungspedals und einem vollständig geöffneten Zustand (100%) des Beschleunigungspedals.

3. Verfahren gemäß Anspruch 2, bei welchem

   - ein erster Punkt (Pmax) existiert, der in einer Ebene Neigung (Pedal)/Drehmoment (elektrischer Motorgenerator) die Koordinaten

      - vollständige Öffnung (100%) und
      - maximales positives Drehmoment (MaxBoostTrq), welches von dem elektrischen Motorgenerator lieferbar ist,

   aufweist, sowie
   - ein zweiter Punkt (Q) mit den Koordinaten

      - vollständiges Lösen (0%) des Beschleunigungspedals und
      - Schnittpunkt mit der Ordinatenachse mit Null-Achsabschnitt (Q0) oder negativem Achsabschnitt (Q1,Q2),

   wobei ein Betrag des Achsabschnitts proportional zu der aktuellen Geschwindigkeit ist.

4. Verfahren gemäß einem der Ansprüche 1 bis 3, bei welchem ein Schnittpunkt der Drehmomentkurve (EMTrq) mit einer Abszissenachse der Ebene einen positiven Betrag aufweist, der proportional zu der aktuellen Geschwindigkeit des Fahrzeugs ist.

5. Verfahren gemäß einem der Ansprüche 3 oder 4, bei welchem die Funktion eine diskrete Funktion der aktuellen Geschwindigkeit ist, die ein Bündel gerader Linien kennzeichnet, die durch den ersten Punkt (Pmax) verlaufen und einen Winkelkoeffizienten aufweisen, der proportional zu diskreten Werten der aktuellen Geschwindigkeit des Fahrzeugs ist.

6. Verfahren gemäß einem der vorhergehenden Ansprüche, bei welchem die Drehmomentkurve eine Teilfunktion bezüglich des Beschleunigungspedals definiert, mit einem Winkelkoeffizienten größer als Null und einem bekannten Term (Q) kleiner/gleich Null, mit den jeweiligen Beträgen proportional zu der Geschwindigkeit (vehSpeed) des Hybridfahrzeugs.

7. Verfahren gemäß einem der vorhergehenden Ansprüche, bei welchem die Drehmomentkurve (EMTrq)

$$\begin{cases} EMTrq = \dfrac{(MaxBoostTrq - MaxRegTrq) \cdot AccPed\%}{100} + MaxRegTrq \\ MaxRegTrq = MaxTrq \cdot f(vehSpeed) \end{cases}$$

gegeben ist als die Summe von

   - einem ersten Betrag, gegeben durch ein Produkt eines Wertes entsprechend der Neigung des Beschleunigungspedals (AccPed%) multipliziert mit einer Differenz zwischen einem maximalen Drehmomentwert (Max-BoostTrq), das von dem elektrischen Motorgenerator abgebbar ist, und einem ersten Parameter (MaxRegTrq); und
   - einem zweiten Betrag, der mit dem ersten Parameter (MaxRegTrq) zusammenfällt, wobei der erste Parameter (MaxRegTrq) eine Funktion zumindest der Geschwindigkeit (vehSpeed) des Fahrzeugs ist.

8. Verfahren gemäß Anspruch 7, bei welchem der erste Parameter (MaxRegTrq) gleich einer Funktion (f(vehSpeed)) der Geschwindigkeit (vehSpeed) des Fahrzeugs ist, mit einem Wert von 0 bis 1, multipliziert mit einem zweiten Parameter (MaxTrq), wobei der zweite Parameter (MaxTrq) abhängig ist von Merkmalen eines Inverters, der dem elektrischen Motorgenerator zugeordnet ist, zur Verwaltung der Übertragung von Energie von und zu Fahrzeugspeicherbatterien.

**9.** Verfahren gemäß Anspruch 7 oder 8, wobei der erste Parameter (MaxRegTrq) gleich einer Funktion (f(vehSpeed)) ist von
der Geschwindigkeit (vehSpeed) des Fahrzeugs, mit einem Wert von 0 bis 1, multipliziert mit einem dritten (KbattS) und/oder einem vierten Parameter (KbattT), welche beide im Bereich von 0 bis 1 liegen, wobei der dritte Parameter eine Funktion eines Ladungszustands (SOC) und eines Allgemeinzustands (SOH) der Fahrzeugbatterien ist, und wobei der vierte Parameter eine Funktion einer Temperatur der Fahrzeugspeicherbatterien ist.

**10.** Verarbeitungseinheit zur Verwaltung eines elektrischen Motorgenerators eines parallelen Hybridfahrzeugs, ausgebildet zur Durchführung des Verfahrens gemäß einem der Ansprüche 1 bis 9.

**11.** Parallelhybridfahrzeug, umfassend ein Getriebe, einen Verbrennungsmotor und einen elektrischen Motorgenerator, welche durch das Getriebe verbunden sind, und ferner umfassend eine Verarbeitungseinheit gemäß Anspruch 10.

**Revendications**

**1.** Procédé pour gérer la propulsion d'un véhicule hybride parallèle comprenant un générateur de moteur électrique et une pédale d'accélérateur et un capteur relatif connecté à celle-ci pour détecter une inclinaison de la pédale d'accélérateur, dans lequel une courbe de couple (EMTrq) délivrée/absorbée par le générateur de moteur électrique est une fonction de deux variables, dans lequel une première variable coïncide avec ladite inclinaison de ladite pédale d'accélérateur et une seconde variable coïncide avec une vitesse actuelle (vehSpeed) du véhicule hybride, le procédé étant **caractérisé en ce que** ladite courbe de couple a une dérivée partielle, par rapport à ladite inclinaison de la pédale d'accélérateur (AccPed%), linéaire dans un domaine entier relatif (0 % - 100 %).

**2.** Procédé selon la revendication 1, dans lequel ledit domaine est continu entre une condition de libération complète (0 %) de la pédale d'accélérateur et une condition d'ouverture complète (100 %) de la pédale d'accélérateur.

**3.** Procédé selon la revendication 2, dans lequel il y a

- un premier point (Pmax) ayant, dans une inclinaison de plan (pédale)/couple (générateur de moteur électrique), des coordonnées

• d'ouverture complète (100 %) et
• de couple positif maximum (MaxBoostTrq) pouvant être délivré par le générateur de moteur électrique,

- un second point (Q) ayant des coordonnées

• de libération complète (0 %) de la pédale d'accélérateur et
• d'intersection avec l'axe des ordonnées avec une interception égale à zéro (Q0) ou une interception négative (Q1, Q2),

dans lequel un module de ladite interception est proportionnel à ladite vitesse actuelle.

**4.** Procédé selon l'une quelconque des revendications 1 à 3, dans lequel une interception de ladite courbe de couple (EMTrq) avec un axe des abscisses dudit plan a un module positif proportionnel à ladite vitesse actuelle du véhicule.

**5.** Procédé selon l'une quelconque des revendications précédentes 3 ou 4, dans lequel ladite fonction est une fonction discrète de ladite vitesse actuelle, identifiant un faisceau de lignes droites passant à travers ledit premier point (Pmax) et ayant un coefficient angulaire proportionnel à des valeurs discrètes de ladite vitesse de courant du véhicule.

**6.** Procédé selon l'une quelconque des revendications précédentes, dans lequel ladite courbe de couple définit une fonction partielle par rapport à ladite pédale d'accélérateur ayant un coefficient angulaire supérieur à zéro et un terme connu (Q) inférieur/égal à zéro avec les modules respectifs proportionnels à ladite vitesse (vehSpeed) du véhicule hybride.

7. Procédé selon l'une quelconque des revendications précédentes, dans lequel ladite courbe de couple (EMTrq)

$$\begin{cases} EMTrq = \dfrac{(MaxBoostTrq - MaxRegTrq)\cdot AccPed\%}{100} + MaxRegTrq \\ MaxRegTrq = MaxTrq \cdot f(vehSpeed) \end{cases}$$

est donnée par la somme

- d'une première quantité donnée par un produit d'une valeur correspondant à ladite inclinaison de la pédale d'accélérateur (AccPed%) multipliée par une différence entre une valeur de couple maximum (MaxBoostTrq) pouvant être délivrée par le générateur de moteur électrique moins un premier paramètre (MaxRegTrq) ;
- d'une seconde quantité coïncidant avec ledit premier paramètre (MaxRegTrq),

dans lequel ledit premier paramètre (MaxRegTrq) est une fonction au moins de ladite vitesse (vehSpeed) du véhicule.

8. Procédé selon la revendication 7, dans lequel ledit premier paramètre (MaxRegTrq) est égal à une fonction (f(vehSpeed)) de ladite vitesse (vehSpeed) du véhicule, ayant une valeur s'échelonnant de 0 à 1, multipliée par un deuxième paramètre (MaxTrq), dans lequel ledit deuxième paramètre (MaxTrq) dépend de caractéristiques d'un convertisseur associé au générateur de moteur électrique pour gérer le transfert d'énergie depuis et pour des batteries de stockage de véhicule.

9. Procédé selon la revendication 7 ou 8, dans lequel ledit premier paramètre (MaxRegTrq) est égal à une fonction (f(vehSpeed)) de ladite vitesse (vehSpeed) du véhicule, ayant une valeur s'échelonnant de 0 à 1, multipliée par un troisième (KbattS) et/ou un quatrième paramètre (KbattT), tous deux s'échelonnant de 0 à 1, dans lequel ledit troisième paramètre est une fonction d'un état de charge (SOC) et d'un état de santé (SOH) desdites batteries de véhicule et dans lequel ledit quatrième paramètre est une fonction d'une température desdites batteries de stockage de véhicule.

10. Unité de traitement pour gérer un générateur de moteur électrique d'un véhicule hybride parallèle configuré pour réaliser le procédé selon l'une quelconque des revendications 1 à 9.

11. Véhicule hybride parallèle comprenant une transmission, un moteur à combustion interne et un générateur de moteur électrique connecté à ladite transmission et comprenant en outre une unité de traitement selon la revendication 10.

EMTrq [Nm]

MaxBoostTrq

100    AccPed [%]

MaxRegTrq

Fig. 1

EMTrq [Nm]

MaxBoostTrq

Pmax

100    AccPed [%]

10%

MaxRegTrq

Fig. 2

EMTrq [Nm]

MaxBoostTrq — Pmax

Q0

Q1

Q2

100   AccPed [%]

MaxRegTrq
(dynamic)

———— Low speed

- - - - Int. speed

— — High speed

Fig. 3

$KbattT$

Batt. Temp

Fig. 4

## REFERENCES CITED IN THE DESCRIPTION

**Patent documents cited in the description**

- IT 102017000019444
- EP 3112234 A
- US 2016059703 A
- EP 1241043 A1